**Europäisches Patentamt**

(19) **European Patent Office**

**Office européen des brevets**

(11) Veröffentlichungsnummer: **0 304 783**
**B1**

(12) # EUROPÄISCHE PATENTSCHRIFT

(45) Veröffentlichungstag der Patentschrift:
**11.07.90**

(51) Int. Cl.⁵: **C02F 11/10, C02F 11/06**

(21) Anmeldenummer: **88113324.3**

(22) Anmeldetag: **17.08.88**

(54) Verbrennen von wässrigen Klärschlämmen nach dem Wirbelschichtverfahren.

(30) Priorität: **26.08.87 DE 3728398**

(43) Veröffentlichungstag der Anmeldung:
**01.03.89 Patentblatt 89/9**

(45) Bekanntmachung des Hinweises auf die Patenterteilung:
**11.07.90 Patentblatt 90/28**

(84) Benannte Vertragsstaaten:
**BE DE FR GB IT**

(56) Entgegenhaltungen:
**DE-A- 2 065 626**
**DE-A- 2 920 526**
**DE-A- 3 103 417**
**US-A- 3 805 713**

(73) Patentinhaber: **BAYER AG,**
**D-5090 Leverkusen 1 Bayerwerk(DE)**

(72) Erfinder: **Reischl, Artur, Dr., Strittberg 18,**
**D-7821 Hoechenschwand(DE)**
Erfinder: **Sahlmen, Friedhelm, Ing., Asberger**
**Strasse 157, D-4130 Moers(DE)**

**Beschreibung**

Die vorliegende Erfindung betrifft ein Verfahren zur selbstgängigen Verbrennung einer Mischung aus Klärschlämmen und polymeren TDI-Rückständen in Wirbelschichtöfen.

In der DE-OS 2 920 526 wird bereits ein mehrstufiges Verfahren zur verbesserten Entsorgung von Klärschlämmen, wie sie in biologisch arbeitenden Kläranlagen als wäßrige Überschußklärschlämme anfallen mit Hilfe von TDI-Rückständen, die bei der Produktion von monomeren Toluylendiisocyanaten (TDI) zwangsweise entstehen, beschrieben. Hierbei werden Verbesserung der Absetzvorgänge von Klärschlämmen und der partiellen Schlammentwässerung beschrieben. Außerdem wird die Verbrennung der Klärschlämme in Mischung mit TDI-Rückständen in Wirbelschichtöfen erwähnt, wobei Quarzsand als Wirbelschichtmaterial verwendet wird. Gemäß diesem Stand der Technik gelingt die Verbrennung der Mischungen, die bis zu max. 32,2 Gew.-% Feststoff enthalten, nur wenn noch erhebliche Mengen Energieträger wie Kohle, Erdgas oder Heizöl mitverwendet werden.

Eine Erhöhung des Feststoffgehaltes verbot sich insbesondere deshalb, weil zu befürchten war, daß wegen des hohen Stickstoffgehaltes der Klärschlämme (ca. 5 bis 8 Gew.-%) und auch der TDI-Rückstände (16,8 bis 17,2 Gew.-%) der Gehalt an Stickoxiden im Rauchgas über die zulässige Grenze steigen würde.

Es war daher nicht zu erwarten, daß es gelingt, bessere Mischungen aus Klärschlämmen und einem hohen Anteil stickstoffhaltiger TDI-Rückstände ohne Zufuhr von üblichen Energieträgern verbrennen zu können, ohne daß Umwelt- und Verarbeitungsprobleme auftreten.

Um so überraschender war es daher, daß man umweltfreundlich, störungsfrei und völlig selbstgängig wäßrige Klärschlämme mit TDI-Rückständen nach dem Wirbelbettverfahren verbrennen kann, wenn man bestimmte Feststoffkonzentrationen der Mischung und bestimmte Konzentrationen des TDI-Rückstandes einhält.

Gegenstand der vorliegenden Erfindung ist daher ein Verfahren zum Verbrennen von wäßrigen Klärschlämmen in Wirbelschichtöfen, das dadurch gekennzeichnet ist, daß man wäßrige Mischungen von Klärschlämmen und TDI-Rück ständen, die einen Feststoffgehalt von 25 bis 98 Gew.-%, vorzugsweise 35 bis 95 Gew.-% aufweisen und deren Anteil an TDI-Rückstand 25 bis 95 Gew.-%, bevorzugt 45 bis 85 Gew.-%, bezogen auf den gesamten Feststoffgehalt, beträgt, ohne weitere Energieträgerzufuhr verbrennt.

Die Verbrennung in Wirbelbettöfen ist an sich bekannt. Für die erfindungsgemäße Verbrennung sollten Temperaturen von 650 bis 870°C, bevorzugt 730 bis 800°C, im Wirbelbett und im Ofenraum 850 bis 1.050°C, bevorzugt 850 bis 950°C, betragen. Als Wirbelbettmaterial können alle üblichen Materialien wie Steinkohlenkesselasche, Quarzsand, Basalt-Splitt, Bimsstein- oder Kalkstein-Granulat eingesetzt werden, wobei feinteilige Steinkohlenkesselasche, besonders bevorzugt wird. Die Korngröße der Wirbelbettmaterialien sollte 0,5 bis 3,5 mm, vorzugsweise 0,5 bis 2,5 mm, betragen. Werden Klärschlämme, die anorganische Salze enthalten, nach dem erfindungsgemäßen Verfahren verbrannt, so empfiehlt es sich, das Wirbelbettmaterial bis zu 10 Gew.-% zu erneuern, sobald die Wirbelbettmasse über 5 Gew.-% anorganischer Salze aufweist, wie in der EP 3831 beschrieben.

In der DE-OS 2 920 526 sind die Toluylendiisocyanatrückstände beschrieben, die gemäß der vorliegenden Erfindung zum Verbrennen von Klärschlämmen eingesetzt werden können.

Die im erfindungsgemäßen Verfahren einzusetzenden TDI-Rückstände fallen, wie erwähnt, zwangsweise bei den gängigen Produktionsverfahren von 2,4- und/oder 2,6-Toluylendiisocyanat in großtechnischem Maßstab an. Es handelt sich dabei um höhermolekulare, über Hauptvalenzbindungen vernetzte teerartige Massen, die im allgemeinen in einer Menge von über 10 Gew.-%, bezogen auf die berechnete quantitative Ausbeute an monomeren Diisocyanaten, entstehen und die im Anschluß an den Destillationsvorgang zwecks besserer Handhabbarkeit meist über 130°C heiß in einem Rührkessel in Wasser eingetragen werden, wobei unter Reaktion eines großen Teils der freien Isocyanatgruppen zu Polyharnstoffgruppen (im folgenden "Denaturierung" des TDI-Rückstandes genannt) eine grobteilige, unregelmäßig geformte, unlösliche Schlacke entsteht. Diese Schlacke hat zwar noch einen Gehalt an freien NCO-Gruppen (im allgemeinen unter 15 Gew.-%, meist 1 bis 10 Gew.-%), jedoch ist sie praktisch frei an monomeren Diisocyanaten. Neben den restlichen NCO-Gruppen weisen die TDI-Rückstandsschlacken in je nach Denaturierungsverfahren unterschiedlichen Mengenverhältnissen Harnstoff-, Biuret-, Uretdion-, Isocyanurat, Carbodiimid-, Uretonimin- und gegebenenfalls auch Methylbenzimidazolongruppen sowie deren Biuretisierungsprodukte auf. Die Schlacken sind über diese verschiedenen funktionellen Gruppen so hoch vernetzt, daß sie selbst bei einer mittleren Teilchengröße von weniger als 5 μm in inerten organischen Lösungsmitteln wie Methylenchlorid, Cyclohexan, Cyclohexanon, Toluol, Xylol oder Dichlorbenzol auch bei Siedetemperatur praktisch unlöslich sind. In siedendem Dimethylformamid werden die Rückstandspulver teilweise angequollen, lösen sich jedoch nicht. Beim Erhitzen erweicht, wenn überhaupt, nur ein sehr geringer Anteil der erfindungsgemäß einzusetzenden TDI-Destillationsrückstände oberhalb von ca. 250°C; jedoch tritt oberhalb von ca. 280°C Zersetzung unter Gasentwicklung ein, ohne daß die Destillationsrückstände schmelzen.

Die gegebenenfalls mit Wasser benetzte oder beim Denaturierungsprozeß im Rührkessel in Wasser suspendierte, sehr grobkörnige TDI-Rückstandsschlacke wird zunächst vorzugsweise mit Hilfe einer Zerkleinerungsmaschine, beispielsweise mit einem Schneidegranulator oder einer Hammermühle, auf weniger als 3 mm vorzerkleinert und anschließend wenn notwendig nach bekannten Mahlverfahren entweder in der Naß- oder Trockenphase auf die gewünschte Endfeinheit gebracht.

Wenn die TDI-Rückstände, beispielsweise beim großtechnisch praktizierten, oben beschriebenen Denaturierungsprozeß, in Wasser oder mit Wasser benetzt anfallen, so bietet sich besonders ökonomisch und umweltfreundlich eine Naßzerkleinerung der TDI-Grobschlacke in einem Teil der meist ca. 0,3 bis 3 %igen wäßrigen Klärschlamm-Suspension des Klärbeckens in diskontinuierlich oder vorteilhaft kontinuierlich arbeitenden, gegebenenfalls zweistufig hintereinander geschalteten Maschinen an. Die Feststoffkonzentrationen dieser Mischungen liegen während der Naßmahlung vorzugsweise zwischen 10 und 45 Gew.-%. Neben Rohr- und Kugelmühlen kommen besonders vorteilhaft Zahnkolloid-, Trigonal-, Zahnring-, Korundscheiben- und Rührwerkskugelmühlen in Frage, je nachdem, welche Korngröße angestrebt wird.

Die bei der Naßzerkleinerung erhaltenen, je nach Arbeitsweise noch unterschiedlichen Mengen an freien NCO-Gruppen aufweisenden TDI-Rückstandsschlacken werden entweder als sehr feinteilige Suspension bzw. Pasten oder als Pulver in derselben Weise wie die durch Trockenzerkleinerung erhältichen TDI-Rückstands-Pulver eingesetzt.

Für die Trockenmahlung wird unter 2 bis 3 mm vorzerkleinerte und bevorzugt bei Temperaturen unter 50°C vorgetrocknete, nicht wesentlich über 15 Gew.-%, bevorzugt unter 5 Gew.-% Feuchtigkeit enthaltende TDI-Rückstandsschlacke eingesetzt. Bei der Wahl der Trockenzerkleinerungsmaschinen sind im wesentlichen nur die gewünschte Endfeinheit und Korngrößerverteilung, aber auch die Mahlkosten von vorrangiger Bedeutung. Die erfindungsgemäß eingesetzten Rückstandsschlacken sind im Vergleich zu Kunststoffen sehr hart und wegen ihres hohen Vernetzungsgrades in den üblichen Zerkleinerungsmaschinen ohne Kühlungsprobleme bei Temperaturen bis ca. 250°C mahlbar, ohne zu erweichen, was insbesondere zur Erzielung von sehr kleinen Korngrößen von besonderer Bedeutung ist.

Verwendung finden beispielsweise Stifts-, Kugel- oder Pralltellermühlen, ferner Luftstrommühlen wie Schlagkreuz-, Zahnkranz- oder Turbomühlen, aber besonders bevorzugt Dampf- oder Luftstrahlmühlen, weil in diesen die Zerkleinerung hauptsächlich durch gegenseitige Teilchenstöße, weniger durch Wandstöße, stattfindet und schon in einem Durchsatz Feinstkorngrößen erzielt werden.

Selbstverständlich sind auch bei der Trockenzerkleinerung sowohl ein- als auch mehrstufige diskontinuierliche oder kontinuierliche Mahlprozesse möglich.

Die TDI-Rückstandspulver können vor ihrer Verwendung im erfindungsgemäßen Verfahren den verschiedensten chemischen Modifizierungen unterworfen werden. Diese zum Teil bereits beim Mahlprozeß durchführbaren Modifizierungsreaktionen können sowohl in der Gasphase als auch in Gegenwart eines flüssigen Reaktionsmediums stattfinden. Hierbei werden insbesondere die in den TDI-Rückstandspulvern noch enthaltenen geringen Mengen an freien Isocyanatgruppen zur Reaktion gebracht. So kann man beispielsweise durch den feingemahlenen TDI-Destillationsrückstand Ammoniakgas oder gasförmige Amine - bevorzugt nach dem Gegenstromprinzip - leiten, wobei in exothermer Reaktion auch ohne mechanische Durchmischung innerhalb sehr kurzer Zeit (je nach Feinheit des Pulvers bis zu weniger als 1 Minute) NCO-Freiheit erreicht ist. Dabei entstehen im TDI-Destillationsrückstand zusätzliche Harnstoffgruppierungen, die besonders leicht Kondensationsreaktionen mit Carbonylverbindungen, insbesondere Formaldehyd, eingehen können, welche gegebenenfalls gleichzeitig oder im Anschluß an die Reaktionen mit Ammoniak bzw. Aminen durch das Pulver geleitet werden können. Anstelle von Formaldehyd-Ammoniak-Gemischen kann auch Urotropin unter hydrolysierenden Bedingungen zur Ausbildung von Methylenharnstoffbrücken eingesetzt werden. Geeignete verdampfbare Amine sind beispielsweise Ethylamin, Diethylamin, Dimethylamin, Butylamin, Dibutylamin, Ethylendiamin und Propylendiamin; als Carbonylverbindungen kommen neben Formaldehyd z.B. Acetaldehyd, Propionaldehyd, Butyraldehyd, Aceton oder Methylethylketon in Frage.

Eine weitere Modifizierungsreaktion aus der Gasphase ist die Umsetzung mit Wasserdampf. Während die Reaktion der freien Isocyanatgruppen der feingepulverten Rückstandsschlacke mit Wasserdampf auch bei Verwendung von fein gemahlenen TDI-Destillationsrückständen unter 100°C nur langsam abläuft, kann man eine quantitative Polyharnstoffbildung innerhalb kurzer Zeit erreichen, wenn man Reaktionstemperaturen deutlich oberhalb des Siedepunkts von Wasser, bevorzugt oberhalb 130°C, anwendet. Bei ausreichend zerkleinerter TDI-Rückstandsschlacke genügt es jedoch, diese, mit Wasser benetzt, ohne weitere Durchmischung den erwähnten Temperaturen auszusetzen. In analoger Weise können selbstverständlich auch wäßriger Ammoniak, wäßrige Aminlösungen oder Alkohole und Carbonsäuren in gasförmigem Zustand für Modifizierungsreaktionen mit den freien NCO-Gruppen eingesetzt werden, beispielsweise Methanol, Ethanol, Propanol, Isopropanol, Butanol, Ethylenglykol, Ameisensäure oder Essigsäure. So modifizierte TDI-Rückstände werden bevorzugt im erfindungsgemäßen Verfahren eingesetzt.

Für die Modifizierung des TDI-Rückstandspulvers in Wasser oder einem organischen inerten Lösungsmittel als Reaktionsmedium sind vor allem unter dem Einfluß von Katalysatoren ablaufende Reaktionen der freien Isocyanatgruppen untereinander von Interesse. Beispiele hierfür sind die Bildung von Uretdiongruppen in Gegenwart von Dimerisierungskatalysatoren wie z.B. trisubstituierten Phosphinen oder die Bildung von Carbodiimidgruppen in Gegenwart von Phospholinoxid. Eine andere Modifizierungsmöglichkeit besteht darin, an die freien Isocyanatgruppen der pulverisierten TDI-Rückstandsschlacke schwach saure Verbindungen (z.B. Bisulfit oder andere Isocyanatabspalter) zu addieren, die später zu jedem gewünschten Zeitpunkt bei höheren Temperaturen unter Freisetzung der Isocyanatgruppen wieder abgespalten werden können. Selbstverständlich können aus flüssiger Phase auch die verschiedenartigsten Modifizierungsreaktionen mit Verbindungen erfolgen, welche insbesondere gegenüber den Isocyanatgruppen der Rückstandspulver reaktive Gruppen (insbesondere Hydroxyl-, Amino-und/oder Carboxylgruppen) aufweisen. Gegebenenfalls kann man durch derartige Modifizierungsreaktionen in das Rückstandspulver auch anionische und/oder kationische oder zur Salzbildung befähigte Gruppen einführen. Die meisten dieser Verbindungen reagieren nicht mit den freien NCO-Gruppen des Rückstands sondern addieren sich auch an dessen Carbodiimidbindungen. Geeignete ein- und mehrwertige Alkohole, Amine und Carbonsäuren, welche gegebenenfalls noch weitere funktionelle Gruppen (beispielsweise ionische und/oder zur Salzbildung befähigte Gruppen) aufweisen können, sind beispielsweise in den DE-Offenlegungsschriften 2 550 796 und 2 550 797 als Reaktionspartner für Polyisocyanate bei der in situ-Herstellung von Polyisocyanat-Polyadditionsprodukten in Polyhydroxylverbindungen beschrieben. Für Modifizierungsreaktionen geeignete Amine werden auch in der DE-OS 2 714 289, geeignete Carbonsäuren in der DE-OS 2 714 293 (in Zusammenhang mit der Addition derartiger Verbindungen an Carbodiimidgruppen) beschrieben. Auch Phosphite können gemäß DE-OS 2 714 292 unter Ausbildung von Phosphonoformamidingruppen an die Carbodiimidbindungen des TDI-Rückstandspulvers addiert werden. Selbstverständlich können auch die schon oben beschriebenen Modifizierungsreaktionen mit Carbonylverbindungen in einem flüssigen Reaktionsmedium stattfinden. Geeignete Carbonylverbindungen werden beispielsweise in der DE-OS 2 639 254 beschrieben.

Sowohl bei der aeroben biologischen Abwasserreinigung, als auch bei der anaeroben, werden Überschußbelebtschlämme (Klärschlämme) gebildet. Gemäß der aeroben biologischen Abwasserreinigung werden die im Wasser gelösten organischen Verbindungen mit Hilfe von Mikroorganismen, die hauptsächlich aus Bakterien-Mischkulturen und Pilzen bestehen, unter Sauerstoffbelüftung des Abwassers überwiegend in Kohlendioxid, Wasser und unter Bildung neuer Bakterienmasse umgewandelt.

Durch die Vermehrung der Mikroorganismen werden große Mengen sog. Überschußbelebtschlammes gebildet, der kontinuierlich durch Sedimentation und Vorentwässerung, vorzugsweise auf Kammerfilterpressen, Siebbandpressen oder durch Zentrifugieren bzw. Dekantieren ausgekreist werden muß.

Im allgemeinen weist der Klärschlamm in Belebungsbecken 0,1 bis 0,8 Gew.-% auf und wird durch die anschließende Vorentwässerung gegebenenfalls unter Zusatz von anorganischen Zuschlagstoffen auf ca. 10 - 50 Gew.-% konzentriert.

Obwohl bei der anaeroben biologischen Reinigung die Vermehrungsrate der Mikroorganismen wesentlich geringer ist und daher weit weniger Überschußbelebtschlamm anfällt, muß auch hier dieser Klärschlamm entsorgt werden.

Die im Wirbelschichtofen durchgeführte Verbrennung des wäßrigen Klärschlammes und des TDI-Rückstandes erfolgt bevorzugt durch separate Dosierung beider Komponenten ins Wirbelbett oder indem die beiden Komponenten unmittelbar vor Eintritt in den Ofenraum gemischt werden, beispielsweise in einer Paddelschnecke, unter Verwendung temperaturgeregelter Dosiereinrichtungen. Wenn die zur Verbrennung kommenden wäßrigen Mischungen noch anorganische Salze enthalten, so ist, wie bereits oben erwähnt, ein partieller, d.h. 5 bis 20 %iger Austausch des Wirbelbettmateriales erforderlich, wenn die Konzentration des anorganischen Salzes an Wirbelbettgut mehr als 5 % beträgt. Hierzu wird das Wirbelbettmaterial vorzugsweise über eine Zellradschleuse und einem Trogkettenförderer abgezogen, und das mit Salzkrusten be ladene Wirbelmaterial noch heiß in ein Wasserbad eingetragen, wo sich das Salz weitgehend ablöst. Das so regenerierte Wirbelmaterial kann dann wieder in das Wirbelbett zurückgeführt werden.

Die in den zur Verbrennung eingesetzten Stoffe enthaltenen organischen Schwefel- und Chlor-Verbindungen liegen im Rauchgas als Schwefeldioxid bzw. Chlorwasserstoff vor. Diese Schadstoffe können gemäß DE 33 26 832 durch feinstverteilte Eindüsung - über Meßgrößen im Reingas gesteuert - von oxidierenden und/oder alkalischen Lösungen in den heißen Abgasstrom oxidiert bzw. neutralisiert und in nachgeschalteten Filteranlagen abgeschieden werden. Auch andere bekannte Verfahren zur Schadstoffminderung in Rauchgasen können Anwendung finden.

Ein besonderer Vorteil des erfindungsgemäßen Verfahrens liegt darin, daß der $NO_x$-Gehalt im Rauchgas weit geringer ist, als aufgrund des Stickstoffgehaltes der zum Einsatz kommenden denaturierten TDI-Rückstände und Klärschlämme zu erwarten gewesen wäre.

Werden wäßrige Mischungen nach dem erfindungsgemäßen Verfahren verbrannt, bei denen der Feststoffanteil zu ungefähr gleichen Gewichtsteilen aus Klärschlamm und TDI-Rückstand besteht und die Feststoffkonzentration mindestens 42 Gew.-% beträgt, so kann bei dieser selbstgängigen Verbrennung noch zusätzlich Dampf erzeugt werden.

Das erfindungsgemäße Verfahren macht zwar die Verwendung zusätzlicher Energieträger unnötig, da sie eine selbstgängige Verbrennung ist, schließt aber nicht aus, daß gegebenenfalls feste und/oder flüssige organische Abfallstoffe, die entsorgt werden müssen, mit verbrannt werden, oder zur Erhöhung der Durchsatzleistung von zu verbrennenden organischen Rückständen Wasser zur Kühlung in den Wirbelschichtofen eingegeben wird. Zur Ausnutzung der Energie kann selbstverständlich eine Wärmerückgewinnung vorgenommen werden.

Die Erfindung soll anhand der folgenden Beispiele erläutert werden (%-Angaben beziehen sich - soweit nichts anderes vermerkt ist - auf Gew.-%.).

Beispiel 1

In einem Wirbelschichtofen von 7 m² Rostfläche wurde über eine Paddelschnecke 2.400 kg/h Klärschlamm mit einem Wassergehalt von 79,8 % und 1.100 kg/h TDI Rückstand mit 7 % Wassergehalt in den Ofenkopf temperaturgeregelt zugegeben.

Ein mittlerer Feststoffgehalt von 43 % stellte sich ein, so daß die Verbrennung ohne Zusatz von Fremdenergie durchgeführt werden konnte.

Die Verbrennungs- und gleichzeitig Wirbelluft wurde als Kaltluft durch den Düsenboden eingeblasen. Die Schadstoffminderung im Rauchgas von $SO_2$ und HCl wurde durch geregelte feinstverteilte Eindüsung von Natronlauge und Chlorbleichlauge in den heißen Abgasstrom vorgenommen.

Folgende Betriebsparameter wurden gemessen:
Temperatur im Wirbelbett 790 °C
Temperatur im Ofenraum 980 °C
Sauerstoff im Abgas 8,5 %
Schwefeldioxid, $SO_2$ im Abgas 90 mg/m$^3_n$
Chlorwasserstoff, HCl im Abgas 75 mg/m$^3_n$
Stickoxide, $NO_x$ im Abgas 110 mg/m$^3_n$

Beispiel 2

Der Wirbelschichtofen wurde wie in Beispiel 1 betrieben. Der TDI-Rückstand wurde in diesem Falle über einen oberhalb des Wirbelbettes angeordneten Injektor pneumatisch gefördert und der Klärschlamm temperaturgeregelt im Ofenkopf zugegeben. In diesem Falle war die Verbrennungs- und Wirbelluft auf 400 °C vorgewärmt.
Menge Klärschlamm 2 400 - 2 700 kg/h
Menge TDI-Rückstand 1 370 kg/h
Temperatur im Wirbelbett 940 °C
Temperatur im Ofenraum 1 020 - 1 060 °C
Sauerstoff, $O_2$ im Abgas 4 - 5 %
Schwefeldioxid, $SO_2$ im Abgas 60 mg/m$^3$
Chlorwasserstoff, HCl 65 mg/m$^3_n$
Stickoxide, $NO_x$ 135 mg/m$^3_n$

Beispiel 3

Wie in Beispiel 1 wurde Klärschlamm und TDI-Rückstand über eine Paddelschnecke im Ofenkopf aufgegeben, TDI-Rückstand temperaturgeregelt und der Wirbelschichtofen mit Kaltluft betrieben.
Folgende Betriebsparameter wurden gemessen:
Menge Klärschlamm 800 kg/h
Menge TDI-Rückstand 670 kg/h
Temperatur im Wirbelbett 770 °C
Temperatur im Ofenraum 870 °C
Sauerstoff, $O_2$ im Abgas 9,1 - 9,3 %
Schwefeldioxid, $SO_2$ im Abgas 85 mg/m$^3_n$
Chlorwasserstoff, HCl 70 mg/m$^3_n$
Stickoxide, $NO_x$ 80 mg/m$^3_n$

Patentansprüche

1. Verfahren zum Verbrennen von wäßrigen Klärschlämmen in Wirbelschichtöfen, dadurch gekennzeichnet, daß man wäßrige Mischungen von Klärschlämmen und TDI-Rückständen, die einen Feststoffgehalt von 25 bis 98 Gew.-% aufweisen und deren Anteil an TDI-Rückstand 25 bis 95 Gew.-%, bezogen auf den Feststoffgehalt, beträgt, ohne weitere Energieträgerzufuhr verbrennt.

2. Verfahren nach Anspruch 1, dadurch gekennzeichnet, daß der Feststoffgehalt 35 - 95 Gew.-% und der Anteil an TDI-Rückstand 45 - 85 Gew.-% beträgt.

3. Verfahren nach Anspruch 1 und 2, dadurch gekennzeichnet, daß man Wasser zur Temperaturführung des Wirbelschichtofens zuspeist.

4. Verfahren nach einem der Ansprüche 1 bis 3, dadurch gekennzeichnet, daß modifizierte TDI-Rückstände hinzugesetzt werden.

Claims

1. A process for burning aqueous sewage sludges in fluidized bed furnaces, characterized in that aqueous mixtures of sewage sludges and TDI residues which have a solids content of 25 to 98% by weight and in which the TDI residue makes up 25 to 95% by weight, based on solids, are burnt without any further input of heat carriers.

2. A process as claimed in claim 1, characterized in that the solids content is form 35 to 95% by weight and the TDI residue makes up from 45 to 85% by weight.

3. A process as claimed in claims 1 and 2, characterized in that water is fed in to control the temperature of the fluidized be furnace.

4. A process as claimed in any of claims 1 to 3, characterized in that modified TDI residues are added.

Revendications

1. Procédé pour la combustion de boues aqueuses de curage dans des fours à couche fluidisée, carctérisé en ce que, sans autre apport supplémentaire d'énergie, on brûle des mélanges aqueux de boues de curage et de résidus de TDI ayant une teneur en matières solides de 25 à 98% en poids et dont la quantité de résidu de TDI s'élève à 25–95% en poids, calculé sur la teneur en matières solides.

2. Procédé selon la revendication 1, caractérisé en ce que la teneur en matières solides est de 35 à 95% en poids, tandis que la fraction de résidu de TDI s'élève à 45–85% en poids.

3. Procédé selon les revendications 1 et 2, caractérisé en ce qu'on assure une alimentation d'eau pour le réglage de la température du four à couche fluidisée.

4. Procédé selon une des revendications 1 à 3, caractérisé en ce qu'on ajoute des résidus modifiés de TDI.